# EUROPÄISCHE PATENTANMELDUNG

(11) **EP 1 084 878 A2**
(43) Veröffentlichungstag der Anmeldung: **21.03.2001**
(21) Anmeldenummer: 00117325.1
(22) Anmeldetag: 21.08.2000
(51) Int. Cl.: B60H 3/00, B60H 1/26

(54) **Luftreiniger**

(30) Priorität: 14.09.1999 DE 19943940
(71) Anmelder: Volkswagen Aktiengesellschaft, 38436 Wolfsburg (DE)
(72) Erfinder: Roosch, Norman, 38108 Braunschweig (DE); Rosin, Volker, 29378 Wittingen (DE); Niedenführ, Sven, Dipl.-Ing., 38479 Tappenbeck (DE)

(57) **Zusammenfassung**

Die Erfindung betrifft einen Luftreiniger (100), insbesondere für eine Frischluftzufuhr eines Fahrgastraumes eines Kraftfahrzeuges oder für eine Ansaugeinrichtung einer Brennkraftmaschine des Kraftfahrzeuges, mit einer Ansaugöffnung (12) und einer Abströmöffnung (16). Hierbei ist der Luftreiniger (100, 200) zweiteilig mit einem ansaugöffnungsseitigen Luftkanal (10) und einem abströmöffnungsseitigen Luftleitteil (14) ausgebildet, wobei in einem vom Luftkanal (10) und Luftleitteil (14) ausgebildeten Strömungskanal ein von einer Wandung (26) des Luftkanals (10) und einer Wandung (24) des Luftleitteiles (14) abgegrenztes Abscheidevolumen (28) mit einer Abscheideöffnung (29) ausgebildet ist, wobei das Abscheidevolumen (28) eine Zuströmöffnung (39) vom Luftkanal (10) sowie eine Durchströmöffnung (40) zum Luftleitteil (14) derart aufweist, daß die Durchströmöffnung (40) entgegen der Schwerkraftrichtung oberhalb der Zuströmöffnung (39) und der Abscheideöffnung (29) angeordnet ist, so daß eine Zuströmrichtung von dem Luftkanal (10) in das Abscheidevolumen (28) und eine Abströmrichtung von dem Abscheidevolumen (28) in das Luftleitteil (14) einen vorbestimmten Winkel derart einschließen, daß zuströmende Partikel im Abscheidevolumen (28) einen dem Luftkanal folgenden Strömungsweg (20) in Richtung Abscheideöffnung (29) verlassen.

## Beschreibung

Die Erfindung betrifft einen Luftreiniger, insbesondere für eine Frischluftzufuhr eines Fahrgastraumes eines Kraftfahrzeuges oder für eine Ansaugeinrichtung einer Brennkraftmaschine des Kraftfahrzeuges, mit einer Ansaugöffnung und einer Abströmöffnung, gemäß dem Oberbegriff des Anspruchs 1.

Die Aufnahme von Frischluft zum Zuführen in einen Fahrgastraum eines Kraftfahrzeuges erfolgt herkömmlicher Weise in einem geschützten Bereich, wie beispielsweise einem Motorraum oder Radkasten. Hierbei ergibt sich jedoch das Problem, daß die aufgenommene Frischluft durch die Motorabwärme ggf. bereits eine erheblich höhere Temperatur aufweist als eine Umgebungsluft. Daher ist es für eine niedrige Temperaturdifferenz zwischen der Umgebungsluft und der aufgenommenen Frischluft wünschenswert, diese in einem vorderen Bereich des Motorraumes, beispielsweise unmittelbar an oder hinter einem Kühlergrill, aufzunehmen. Hierbei ergibt sich jedoch das Problem, daß die angesaugte Frischluft ggf. Partikel, wie Schmutz und/oder Schnee, mit sich reißt, wobei jedoch ein Eindringen dieser Partikel in die Luftzufuhr des Fahrgastraumes, oder der Brennkraftmaschine zu verhindern ist.

Aus der JP 8042417 ist beispielsweise ein Luftreiniger bekannt, in dessen Ansaugrohr Wirbelflügel sowie in einem Abstand 1/2nL von der Ansaugöffnung entfernt Austrittsöffnungen für größere Schmutzpartikel vorgesehen sind, wobei L eine Länge des Saugrohres bezeichnet und n eine ganze Zahl ist. Hierdurch soll eine Abscheidung der Schmutzpartikel von angesaugter Luft erzielt werden, wobei gleichzeitig eine Geräuschdämpfung des Luftreinigers durch die Austrittsöffnungen nicht negativ beeinflußt werden soll. Dieser Luftreiniger benötigt jedoch eine zu den Austrittsöffnungen genau passende Länge L des Ansaugrohres, so daß bei unterschiedlichen Einbaupositionen selbst bei gleicher Fahrzeugplattform mit dementsprechend unterschiedlicher Länge für das Ansaugrohr die Austrittsöffnungen an entsprechend unterschiedlichen Stellen angeordnet sein müssen, wodurch dieser Luftreiniger nur sehr aufwendig für unterschiedliche Motorvarianten anpaßbar ist.

Ferner ist aus der US 1 534 831 ein Luftreiniger für einen Vergaser einer Brennkraftmaschine bekannt, bei dem in einem Strömungskanal ein Deflektor derart angeordnet ist, daß angesaugte Frischluft um den Deflektor herum strömt und etwaige in der angesaugten Luft enthaltene Partikel von dem Deflektor radial nach außen abgelenkt werden. Diese Anordnung benötigt jedoch viel Bauraum, da der Deflektor über seinem vollständigen Umfang umströmt werden und dementsprechend ein im Durchmesser großer Strömungskanal vorgesehen sein muß.

Der vorliegenden Erfindung liegt daher die Aufgabe zugrunde, einen verbesserten Luftreiniger der obengenannten Art zur Verfügung zu stellen, wobei die obengenannten Nachteile überwunden werden und eine einfache, leicht zu montierende und an unterschiedliche Motorvarianten bzw. Einbauorte in einem Motorraum einfach anpaßbare Anordnung zur Verfügung steht.

Diese Aufgabe wird erfindungsgemäß durch einen Luftreiniger der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß der Luftreiniger zweiteilig mit einem ansaugöffnungsseitigen Luftkanal und einem abströmöffnungsseitigen Luftleitteil ausgebildet ist, wobei in einem vom Luftkanal und Luftleitteil ausgebildeten Strömungskanal ein von einer Wandung des Luftkanals und einer Wandung des Luftleitteiles abgegrenztes Abscheidevolumen mit einer Abscheideöffnung ausgebildet ist, wobei das Abscheidevolumen eine Zuströmöffnung vom Luftkanal sowie eine Durchströmöffnung zum Luftleitteil derart aufweist, daß die Durchströmöffnung entgegen der Schwerkraftrichtung oberhalb der Zuströmöffnung und der Abscheideöffnung angeordnet ist, so daß eine Zuströmrichtung von dem Luftkanal in das Abscheidevolumen und eine Abströmrichtung von dem Abscheidevolumen in das Luftleitteil einen vorbestimmten Winkel derart einschließen, daß zuströmende Partikel im Abscheidevolumen einen dem Luftkanal folgenden Strömungsweg in Richtung Abscheideöffnung verlassen.

Dies hat den Vorteil, daß Frischluft auch von einer ansonsten ungeschützten Stelle, beispielsweise am Kühlergrill, abgesaugt werden kann, ohne die Gefahr eines Eindringens von in der Frischluft vorhandenen Partikeln. Ferner ist der neuartige Luftreiniger kompakter, einfach in der Montage, leicht an unterschiedliche Motorvarianten wie auch Fahrzeugplattformen anpaßbar und benötigt weniger Bauraum. Ggf. angesaugte Partikel sammeln sich in dem Abscheidevolumen und werden sofort oder in zeitlichen Abständen über die Abscheideöffnung nach außen abgegeben. Zusätzlich ergibt sich durch die erfindungsgemäße Ausbildung des Luftreinigers ein vermindertes Luftansauggeräusch. Ferner ist die Abscheidung von Partikel zusätzlich schwerkraftunterstützt.

In einer bevorzugten Ausführungsform ist eine die Abscheideöffnung verschließende Einrichtung vorgesehen, welche derart ausgebildet ist, daß sie zum Abführen von Partikeln aus dem Abscheidevolumen unter einer vorbestimmten Bedingung öffnet. Diese Einrichtung hat zusätzlich eine Dichtfunktion, welche ein Ansaugen von ggf. warmer Nebenluft verhindert.

Beispielsweise ist die die Abscheideöffnung verschließende Einrichtung am Luftleitteil angeordnet.

In einer bevorzugten Ausführungsform ist die die Abscheideöffnung verschließende Einrichtung als Kunststofflippe ausgebildet, welche bei einem vorbestimmten Staudruck im Abscheidevolumen öffnet.

In einer alternativen Ausführungsform ist die die Abscheideöffnung verschließende Einrichtung als Klappe ausgebildet, welche am Luftleitteil derart schwenkbar angelenkt ist, daß die Klappe bei einem vorbestimmten Staudruck im Abscheidevolumen in eine geöffnete Position schwenkt, wobei optional ein elastisches Element, insbesondere eine Feder, vorgesehen ist, welche die Klappe in Schließrichtung mit einer vorbestimmten, den Öffnungsstaudruck bestimmenden Kraft beaufschlagt. Die Klappe ist beispielsweise aus Metall, Blech oder Kunststoff hergestellt.

Zum Verhindern von störendem Klappern ist ein geräuschdämpfendes Element, insbesondere Gummi, Gummipuffer, Federanschlag oder Schaumstoff, als Anschlag zwischen der Klappe und der Wandung vorgesehen.

Für eine einfache, schnelle und kostengünstige Montage sind der Luftkanal und das Luftleitteil ineinandersteckbar ausgebildet.

Zum Halten des Luftreinigers weist der Luftkanal eine Einrichtung zum Befestigen an einem Karosserieteil des Kraftfahrzeuges auf.

Zweckmäßigerweise weist das Luftleitteil einen Anschlußflansch für einen Schlauch einer Frischluftzufuhr eines Fahrgastraumes oder einer Ansauganlage einer Brennkraftmaschine auf.

Zum Unterstützen eines Sammelns von Partikeln in dem Abscheidevolumen ist die das Abscheidevolumen begrenzende Wandung des Luftleitteiles derart ausgebildet, daß sich in dem Abscheidevolumen eine Wirbelströmung ergibt und eine Massenträgheitabscheidung der Partikel erfolgt.

Für einen hohen Abscheidegrad von Partikeln im Abscheidevolumen und ein Rückhalten dieser durch einen hohen Staudruck ist das Abscheidevolumen derart ausgebildet und angeordnet, daß über den Luftkanal angesaugte Luft direkt oder mit einem Umlenkwinkel von kleiner 90 Grad in das Abscheidevolumen einströmt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine schematische Schnittansicht eines erfindungsgemäßen Luftreinigers,
- Fig. 2: eine bevorzugte Ausführungsform eines Luftkanals für einen erfindungsgemäßen Luftreiniger in perspektivischer Ansicht,
- Fig. 3: eine bevorzugte Ausführungsform eines Luftleitteiles für einen erfindungsgemäßen Luftreiniger in Seitenansicht,
- Fig. 4: in einer Ansicht in Richtung Pfeil B von Fig. 3,
- Fig. 5: in einer Schnittansicht entlang Linie A-A von Fig. 4 und
- Fig. 6: eine schematische Schnittansicht einer alternativen Ausführungsform eines erfindungsgemäßen Luftreinigers.

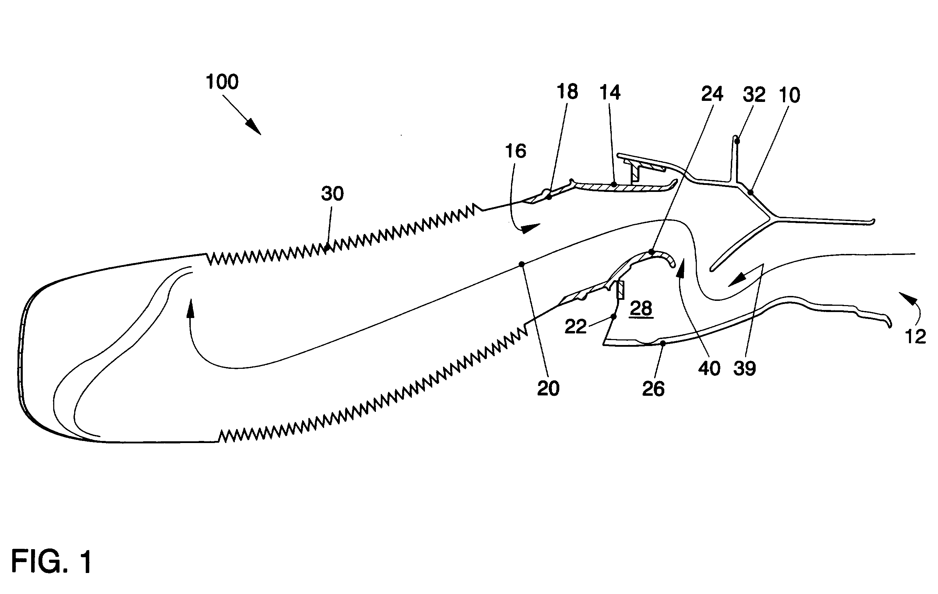

Der in Fig. 1 schematisch dargestellte erfindungsgemäße Luftreiniger 100 für eine nicht näher dargestellte Frischluftzufuhr für einen Fahrgastraum eines Kraftfahrzeuges oder für eine nicht dargestellte Ansaugeinrichtung einer Brennkraftmaschine ist zweiteilig ausgebildet und umfaßt einen Luftkanal 10 mit einer Ansaugöffnung 12 sowie ein Luftleitteil 14 mit einer Abströmöffnung 16 sowie einem Anschlußflansch 18. Luftkanal 10 und Luftleitteil 14 sind ineinander gesteckt und bilden einen Strömungskanal aus, der der angesaugten Frischluft einen im Querschnitt im wesentlichen Z-förmigen Strömungsweg 20 aufzwingt. Im Bereich einer ersten Kurve des Z-förmigen Strömungsweges 20 ist eine Klappe 22 schwenkbar am Luftleitteil angelenkt, so daß diese Klappe 22, eine Wandung 24 des Luftleitteiles 14 und eine Wandung 26 des Luftkanals 10 ein Abscheidevolumen 28 begrenzen, welches ein Totvolumen für die Strömung 20 darstellt, d.h. die Strömung 20 durchströmt diesen Bereich nicht sondern baut in diesem einen Staudruck auf. Durch die Z-förmige Umlenkung sammeln sich in dem Abscheidevolumen 28 ggf. mit der Frischluft angesaugte Partikel. Das Abscheidevolumen 28 weist eine Zuströmöffnung 39, welche den Luftkanal 10 mit dem Abscheidevolumen 28 verbindet, sowie eine Durchströmöffnung 40 auf, welche das Abscheidevolumen 28 mit dem Luftleitteil 14 verbindet.

Die Anordnung aus Strömungsweg 20 und Abscheidevolumen 28 ist derart, daß sich im Abscheidevolumen 28 in Abhängigkeit von einer Geschwindigkeit des Kraftfahrzeuges ein Staudruck aufbaut. Ferner ist ein Gewicht der Klappe 22 und ggf. eine auf die Klappe 22 in Schließrichtung wirkende elastische Kraft derart gewählt, daß ein vorbestimmter Staudruck die Klappe 22 öffnet, so daß in dem Abscheidevolumen 28 gesammelte Partikel von der nun auch teilweise durch das Abscheidevolumen 28 strömenden Luftströmung nach außen befördert werden. Mit anderen Worten wird das Abscheidevolumen 28 ab einer vorbestimmten Geschwindigkeit des Kraftfahrzeuges relativ zu einer Umgebungsluft in diskreten Zeitabschnitten geleert. In Fig. 1 ist die Klappe in ihrer Ruhe- bzw. Schließstellung dargestellt, bei der das Abscheidevolumen 28 bzgl. der Umgebung verschlossen ist und sich Partikel in diesem Sammeln. Durch die Klappe 22 ist ferner ein Ansaugen von Nebenluft verhindert, welche ggf. eine unerwünscht hohe Temperatur aufweisen würde.

Die Wandung 24 des Luftleitteiles 14 ist leicht gebogen ausgebildet, so daß sich ein Wirbel im Abscheidevolumen 28 bildet, welcher einerseits bereits gesammelte Partikel im Abscheidevolumen zurückhält und andererseits mit dem Luftstrom 20 heran strömende Partikel entnimmt und in das Abscheidevolumen 28 leitet.

An dem Flansch 18 des Luftleitteiles 14 ist ein flexibler Schlauch 30 zum Verbinden mit der Frischluftzufuhr des Kraftfahrzeuges befestigbar. Hierdurch ist unabhängig vom Einbauort des Luftreinigers 100 relativ zur Frischluftzufuhr eine einfache und funktionssichere Verbindung gewährleistet. Mittels einer Befestigungseinrichtung 32 am Luftkanal 10 ist der Luftreiniger 10 an einem Karosserieteil des Kraftfahrzeugs festlegbar.

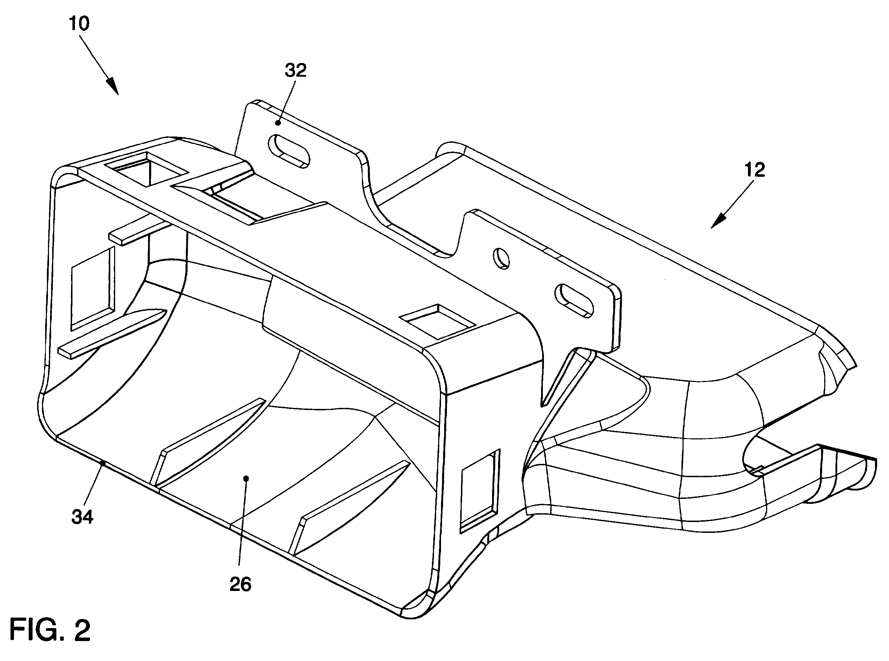

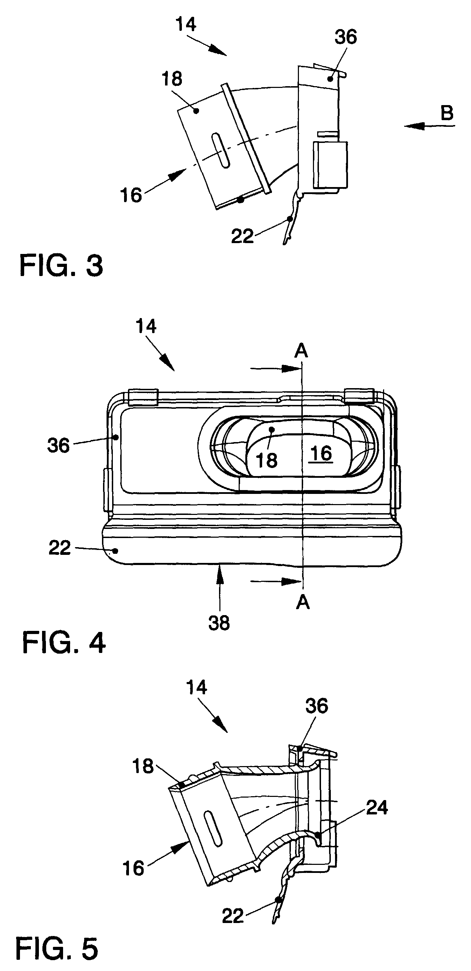

Fig. 2 bis 5 zeigen eine bevorzugte Ausführungsform eines Luftkanals 10 und eines Luftleitteiles 14, welche ineinander schiebbar bzw. steckbar ausgebildet sind, wobei gleiche Teile mit gleichen Bezugsziffern, wie in Fig. 1, bezeichnet sind. Hierbei weist der Luftkanal 14 einen im Querschnitt rechtwinkligen Anschlußflansch 34 auf, in den ein entsprechender rechtwinkliger Anschlußflansch 36 des Luftleitteiles 14 einsteckbar ist und den Anschlußflansch 34 rundum abdichtet. Die Klappe 22 schlägt in ihrer Ruheposition bzw. in ihrer Schließstellung mit ihrem freien Umfang 38 an die Wandung 26 an und verschließt somit das Abscheidevolumen 28 gegen eine Umgebung. Durch den Luftstrom 20 baut sich im Abscheidevolumen der vorerwähnter Staudruck auf.

Bei feuchten Umgebungsbedingungen und/oder niedrigen Umgebungstemperaturen ist ein blockieren der Klappe 22 durch sich ansetzende Feuchtigkeit und Schmutz oder Eis im Bereich eines Schließspaltes zwischen der Klappe 22 und der Wandung 26 zu verhindern. Hierzu wird, beispielsweise unter der Einwirkung eines Thermostates oder eines Bimetalls, die Klappe wenigstens leicht geöffnet, so daß über die so entstehende Öffnung erwärmte Nebenluft aus einem Motorraum angesogen wird. Diese taut ggf. vorhandenes Eis ab und transportiert ggf. vorhandene Feuchtigkeit ab. Die Klappe 22 wird beispielsweise bei Temperaturen ab Null Grad Celsius und darunter geöffnet.

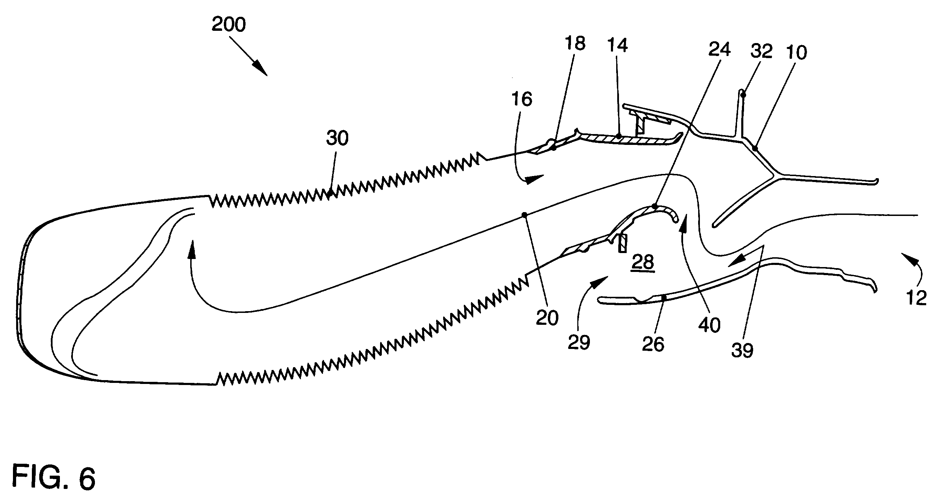

Die in Fig. 6 dargestellte alternative Ausführungsform eines erfindungsgemäßen Luftreinigers 200 entspricht im wesentlichen der Ausführungsform 100 gemäß Fig. 1, wobei gleiche Teile mit gleichen Bezugsziffern gekennzeichnet sind, so daß zu deren Erläuterung auf obige Beschreibung zu den Fig. 1 bis 5 verwiesen wird. Im Unterschied zur ersten Ausführungsform 100 weist dieser Luftreiniger 200 keine Klappe 22 sondern eine permanent offene Abscheideöffnung 29 auf. Mit dem Luftstrom 20 ankommende Partikel werden somit sofort im Bereich des Abscheidevolumens 28 vom Luftstrom 20 getrennt und in Richtung Abscheideöffnung 29 abgelenkt, wo die Partikel nach außen abgeführt werden. Durch die oben erwähnte Wirbelbildung im Abscheidevolumen 28 mittels der bogenförmig ausgeführten Wandung 24 ist ein Ansaugen von Nebenluft durch die Abscheideöffnung auf ein Minimum reduziert.

## Patentansprüche

1. Luftreiniger (100, 200), insbesondere für eine Frischluftzufuhr eines Fahrgastraumes eines Kraftfahrzeuges oder für eine Ansaugeinrichtung einer Brennkraftmaschine des Kraftfahrzeuges, mit einer Ansaugöffnung (12) und einer Abströmöffnung (16), **dadurch gekennzeichnet**, daß der Luftreiniger (100, 200) zweiteilig mit einem ansaugöffnungsseitigen Luftkanal (10) und einem abströmöffnungsseitigen Luftleitteil (14) ausgebildet ist, wobei in einem vom Luftkanal (10) und Luftleitteil (14) ausgebildeten Strömungskanal ein von einer Wandung (26) des Luftkanals (10) und einer Wandung (24) des Luftleitteiles (14) abgegrenztes Abscheidevolumen (28) mit einer Abscheideöffnung (29) ausgebildet ist, wobei das Abscheidevolumen (28) eine Zuströmöffnung (39) vom Luftkanal (10) sowie eine Durchströmöffnung (40) zum Luftleitteil (14) derart aufweist, daß die Durchströmöffnung (40) entgegen der Schwerkraftrichtung oberhalb der Zuströmöffnung (39) und der Abscheideöffnung (29) angeordnet ist, so daß eine Zuströmrichtung von dem Luftkanal (10) in das Abscheidevolumen (28) und eine Abströmrichtung von dem Abscheidevolumen (28) in das Luftleitteil (14) einen vorbestimmten Winkel derart einschließen, daß zuströmende Partikel im Abscheidevolumen (28) einen dem Luftkanal folgenden Strömungsweg (20) in Richtung Abscheideöffnung (29) verlassen.

2. Luftreiniger (100) nach Anspruch 1, **dadurch gekennzeichnet**, daß eine die Abscheideöffnung (29) verschließende Einrichtung (22) vorgesehen ist, welche derart ausgebildet ist, daß sie zum Abführen von Partikeln aus dem Abscheidevolumen (28) unter einer vorbestimmten Bedingung öffnet.

3. Luftreiniger (100) nach Anspruch 2, **dadurch gekennzeichnet**, daß die die Abscheideöffnung (29) verschließende Einrichtung (22) am Luftleitteil (14) angeordnet ist.

4. Luftreiniger nach Anspruch 2 oder 3, **dadurch gekennzeichnet**, daß die die Abscheideöffnung (29) verschließende Einrichtung als Kunststofflippe ausgebildet ist, welche bei einem vorbestimmten Staudruck im Abscheidevolumen (28) öffnet.

5. Luftreiniger (100) nach Anspruch 2 oder 3, **dadurch gekennzeichnet**, daß die die Abscheideöffnung (29) verschließende Einrichtung als Klappe (22) ausgebildet ist, welche am Luftleitteil (14) derart schwenkbar, insbesondere mit einem Filmscharnier, angelenkt ist, daß die Klappe (22) bei einem vorbestimmten Staudruck im Abscheidevolumen (28) in eine geöffnete Position schwenkt.

6. Luftreiniger (100) nach Anspruch 5, **dadurch gekennzeichnet**, daß die Klappe (22) aus Metall, Blech oder Kunststoff hergestellt ist.

7. Luftreiniger (100) nach Anspruch 5 oder 6, **dadurch gekennzeichnet**, daß ein elastisches Element, insbesondere eine Feder, vorgesehen ist, welche die Klappe (22) in Schließrichtung mit einer vorbestimmten, den Öffnungsstaudruck bestimmenden Kraft beaufschlagt.

8. Luftreiniger (100) nach einem der Ansprüche 5 bis 7, **dadurch gekennzeichnet**, daß ein geräuschdämpfendes Element, insbesondere Gummi, Gummipuffer, Federanschlag oder Schaumstoff, als Anschlag zwischen der Klappe (22) und der Wandung (26) vorgesehen ist.

9. Luftreiniger (100, 200) nach einem der vorhergehenden Ansprüche, **dadurch gekennzeichnet**, daß der Luftkanal (10) und das Luftleitteil (14) ineinandersteckbar ausgebildet sind.

10. Luftreiniger (100, 200) nach einem der vorhergehenden Ansprüche, **dadurch gekennzeichnet**, daß der Luftkanal (10) eine Einrichtung (32) zum Befestigen an einem Karosserieteil des Kraftfahrzeuges aufweist.

11. Luftreiniger (100, 200) nach einem der vorhergehenden Ansprüche, **dadurch gekennzeichnet**, daß das Luftleitteil (14) einen Anschlußflansch (18) für einen Schlauch (30) einer Frischluftzufuhr eines Fahrgastraumes oder einer Ansauganlage einer Brennkraftmaschine aufweist.

12. Luftreiniger (100, 200) nach einem der vorhergehenden Ansprüche, **dadurch gekennzeichnet**, daß die das Abscheidevolumen (28) begrenzende Wandung (24) des Luftleitteiles (14) derart ausgebildet ist, daß sich in dem Abscheidevolumen (28) eine Wirbelströmung ergibt und eine Massenträgheitabscheidung der Partikel erfolgt.

13. Luftreiniger (100, 200) nach einem der vorhergehenden Ansprüche, **dadurch gekennzeichnet**, daß das Abscheidevolumen (28) derart ausgebildet und angeordnet ist, daß über den Luftkanal (10) angesaugte Luft direkt oder mit einem Umlenkwinkel von kleiner 90 Grad in das Abscheidevolumen (28) einströmt.
